# EUROPÄISCHE PATENTANMELDUNG

(11) **EP 2 455 162 A1**
(43) Veröffentlichungstag der Anmeldung: **23.05.2012**
(21) Anmeldenummer: 10189383.2
(22) Anmeldetag: 29.10.2010
(51) Int. Cl.: B01L 3/00, F16K 99/00

(54) **Mikrofluidisches Element zur Analyse einer Probenflüssigkeit**

(71) Anmelder: Roche Diagnostics GmbH, 68305 Mannheim (DE); F. Hoffmann-La Roche AG, 4070 Basel (CH)
(72) Erfinder: Böhm, Christoph, 68519 Mannheim (DE); Würl, Susanne, 68167 Mannheim (DE)
(74) Vertreter: Durm & Partner

(57) **Zusammenfassung**

Ein mikrofluidisches Element (1) zur Analyse einer Flüssigkeitsprobe hat ein Substrat (34) und ein von dem Substrat (34) und einer Deckschicht umschlossenes mikrofluidisches Leitungssystem (2) mit einer Kanalstruktur (7). Die Kanalstruktur (7) umfasst einen Kanal (8, 13) mit zwei Seitenwänden (22) und eine Kammer (9, 11), die mit dem Kanal (8, 13) in Fluidverbindung steht. Die Kammer (9, 11) hat eine Kammerwand (20) mit einer Einlassöffnung (21). Der Kanal (8, 13) umfasst einen Kanalabschnitt (18) und einen sich an den Kanalabschnitt (18) anschließenden Ventilabschnitt (19), wobei der Ventilabschnitt (19) derart mit der Einlassöffnung (21) in der Kammerwand (20) in Fluidverbindung steht, dass eine Flüssigkeit aus dem Kanal (8, 13) durch den Ventilabschnitt (19) in die Kammer (9, 11) strömen kann. Der Ventilabschnitt (19) weist einen sich in Strömungsrichtung vergrößernden Flüssigkeitstransportquerschnitt auf. Der Flüssigkeitstransportquerschnitt in dem Ventilabschnitt (19) ist größer als der Flüssigkeitstransportquerschnitt in dem vorhergehenden Kanalabschnitt (18).

## Beschreibung

Die vorliegende Erfindung betrifft ein mikrofluidisches Element zur Analyse einer Flüssigkeitsprobe mit einem Substrat und einem von dem Substrat und einer Deckschicht umschlossenen mikrofluidischen Leitungssystems mit einer Kanalstruktur. Die Kanalstruktur umfasst einen Kanal und eine mit dem Kanal in Fluidverbindung stehende Kammer. Die Flüssigkeit wird durch den Kanal in die Kammer geleitet, wobei der Flüssigkeitseintritt in die Kammer gezielt erfolgen soll.

Derartige mikrofluidische Elemente oder Testträger werden beispielsweise für biochemische Assays verwendet, bei denen in den Kammern Untersuchungen von Parametern der Flüssigkeit stattfinden. Derartige Tests werden in in-vitro-diagnostischen Systemen eingesetzt, beispielsweise für immunologische Untersuchungen. Diese immunologischen Tests bedürfen oft einer mehrstufigen Reaktionsführung, so dass die Testprozedur in mehreren Teilschritten erfolgt. Beispielsweise wird zunächst die zu untersuchende Probe in die Probenkammer eingebracht. Sie wird dort mit immobilisierten, d. h. mit lokal in der Kammer fixierten, Fängermolekülen, in Kontakt gebracht, so dass die zu den Fängermolekülen komplementären Moleküle in der Probenflüssigkeit mit den Fängermolekülen reagieren können. Diese Fängermoleküle können in Form von einzelnen Spots, aber auch als Mikroarray immobilisiert sein. Ein Mikroarray ist dann von Vorteil, wenn verschiedene Probenparameter in einer Kammer nachgewiesen werden sollen. Nach der Reaktion der Probe mit den immobilisierten Fängermolekülen, die beispielsweise Antikörper sein können, erfolgt in einem weiteren Prozessschritt das Waschen der Probenkammer mit einer Waschflüssigkeit. In einem nächsten Schritt wird eine Label-Flüssigkeit in die Kammer geleitet oder es werden Reagenzien zugeführt, so dass Nachweis-Antikörper zu den bereits gebundenen Molekülen gelangen können. Derartige Label können beispielsweise Fängerantikörper mit Fluoreszenzmarkern sein. In einem weiteren Schritt erfolgt dann wieder ein Waschen der Kammer mit einer Waschflüssigkeit. Dieser Schritt wird beispielsweise für eine "Bound-Free-Separation" verwendet, um also freie und ungebundene Nachweis-Antikörper, beispielsweise mit einem fluoreszierenden Label gekoppelte Antikörper, zu entfernen. Damit die gesamten freien Label-Antikörper entfernt werden können, findet dieser Waschprozess häufig mehrfach hintereinander statt. Nur so wird sichergestellt, dass alle freien Antikörper entfernt sind und nur die gebundenen Antikörper gemessen werden.

Systembedingt ist es bei mikrofluidischen Elementen auf Grund des Platzmangels häufig nicht möglich, für jeden Prozessschritt einen separaten Kanal mit einem separaten Kapillarstop im Testträger oder auf dem mikrofluidischen Element zu integrieren. Daher müssen die Kanäle und Ventile mehrfach hintereinander benutzt werden. Um die Fluidströmung zu kontrollieren, werden beispielsweise geometrische Ventile als Kapillarstop verwendet. Ein kapillarer Flüssigkeitstransport wird durch die abrupte Querschnittsänderung gestoppt, bei der der kleine Kanal in die größere Kammer übergeht. Dieser Übergang bildet also ein Ventil.

Die im Stand der Technik bekannten Ventile und Übergänge sind jedoch dazu ausgelegt, nur einmal benutzt zu werden. Bei einer mehrfachen Benutzung können sie nicht zuverlässig und robust entlüftet werden, so dass ein gesteuerter Flüssigkeitstransport nicht zuverlässig gewährleistet werden kann. Insbesondere bei Waschpuffern, die detergenzhaltige Lösungen umfassen, entsteht am Ventil häufig eine Seifenhaut, so dass eine Entlüftung des Ventils und des Kanals durch die Seifenhaut verhindert wird. Darüber hinaus verbleibt systembedingt durch hohe Kapillarkräfte bzw. Adhäsion häufig Restflüssigkeit in den Kanten oder Ecken der Kanäle, so dass während der kapillaren Befüllung beispielsweise eines Hebers (S- oder U-förmig geformter Kanal zwischen zwei Kammern) Flüssigkeitsreste an dessen Ende verbleiben, welche beim Übergang in die nachfolgende Kammer, ineinanderfließen können und so die Luft während der nachfolgenden Befüllung nicht mehr entweichen kann. Die Flüssigkeitsbefüllung stoppt und eine Überführung des Fluids in die nächste Kammer ist damit nicht mehr möglich, da das Prinzip der kommunizierenden Kanäle (Röhren) nicht mehr erfüllt ist. Diese Gefahr besteht insbesondere bei den verwendeten mikrofluidischen Kanälen, die eine Siphonstruktur aufweisen und mehrfach benutzt werden sollen. Bei anderen Ventiltypen ist Restflüssigkeit in den Kanälen weniger kritisch, da hier kein kommunizierender Kanal für die Funktion der Kanalstruktur vorausgesetzt wird. Das Problem besteht prinzipiell überall, wo Kanalstrecken kapillar befüllt werden müssen.

Im Stand der Technik sind unterschiedliche Lösungsansätze bekannt, um ein Ventil zu schaffen, das mehrfach benutzt werden kann. Beispielsweise wird in US 2007/0134799 A1 und in US 6,395,553 B1 ein mikrofluidisches Ventil vorgeschlagen, bei dem eine federbelastete Stahlkugel einen Auslass verschließt. Ein derartiges, in der Herstellung teures und aufwändiges Ventil wird in mikrofluidischen Testassays verwendet, wenn keine siphonartige Struktur der Kanäle eingesetzt werden kann. Zum Transport der Flüssigkeiten ist es notwendig, dass das Ventil am Kammerauslass geöffnet wird. Dies geschieht in der Regel durch Erzeugen einer Zentrifugalkraft, so dass die Verwendung dieses Ventils auf rotierende Testträger beschränkt ist.

Beim Start der Rotation wird die Kugel innerhalb des Ventils radial nach außen gedrückt und gibt die Öffnung frei, so dass das Fluid durch das Ventil strömen kann. Wird eine vorgegebene Rotationsgeschwindigkeit unterschritten, so reduziert sich die Zentrifugalkraft, und die Federkraft der auf die Kugel wirkenden Feder überwiegt und verschließt das Ventil. Neben der Federkraft muss zum Öffnen des Ventils auch die Reibung der Ventilkugel überwunden werden.

Die zur Steuerung der Flüssigkeit notwendigen Kräfte werden auch in anderen Kapillarstrukturen häufig durch Zentrifugalkräfte erzeugt. Es sind aber auch andere Mittel zur Steuerung der Flüssigkeiten bekannt, die beispielsweise in DE 10 2005 048 260 A1 zusammengefasst sind. Eine Möglichkeit der Steuerung der Fluide in rotierenden Testträgern ist die Verwendung eines Siphonkanals zwischen zwei Kammern, wobei durch eine geeignete Anordnung des Einlasses des Siphonkanals und des Auslasses in radialer Richtung eine gewünschte Fluidsteuerung erzielt wird. Ein derartiges Konzept verfolgen auch beispielsweise die WO 95/33986 A1, WO 95/06870 A1, WO 93/19827 A1 oder die US 5,160,702 B1.

Trotz der im Stand der Technik vorgenommenen Bemühungen, die mikrofluidischen Strukturen im Hinblick auf biochemische Assays zu verbessern, treten immer wieder Probleme mit der Entlüftung der einzelnen Kanäle, insbesondere der Siphonkanäle auf. Diese Probleme häufen sich bei mehrfacher Benutzung eines Kanals durch verschiedene Flüssigkeiten und insbesondere bei Siphonkanälen, deren Breite relativ gering ist und im Bereich kleiner ca. 0,4 mm liegt.

Aus dem Stand der Technik ergibt sich somit die Aufgabe, ein mikrofluidisches Element mit einer mikrofluidischen Kanalstruktur zu schaffen, bei dem zum einen eine zuverlässige Steuerung von Flüssigkeiten innerhalb der Kanalstruktur auch bei Mehrfachbenutzung erfolgt, zum anderen eine Entlüftung bei mehrfacher Benutzung zuverlässig gewährleistet ist. Daneben soll ein derartiges Element preiswert in der Herstellung sein.

Gelöst wird die vorliegende Aufgabe durch ein mikrofluidisches Element mit den Merkmalen des Anspruchs 1.

Erfindungsgemäß umfasst das mikrofluidische Element zur Analyse einer Flüssigkeitsprobe, insbesondere für mehrstufig durchgeführte biochemische Analyseprozesse, ein Substrat und ein von dem Substrat und einer Deckschicht umschlossenes mikrofluidisches Leitungssystem. Das Leitungssystem umfasst wenigstens eine Kanalstruktur mit einem Kanal, der zwei Seitenwände hat, und mit einer Kammer, die mit dem Kanal in Fluidverbindung steht. Der Kanal weist einen Kanalabschnitt und einen sich an den Kanalabschnitt anschließenden Ventilabschnitt auf, der in die Kammer der Kanalstruktur mündet. Die Kammer hat eine Kammerwand mit einer Einlassöffnung, mit der der Ventilabschnitt derart in Fluidverbindung steht, dass eine Flüssigkeit aus dem Kanal durch den Ventilabschnitt und die Einlassöffnung in die Kammer strömen kann. Erfindungsgemäß hat der Ventilabschnitt einen sich in Strömungsrichtung vergrößernden Flüssigkeitstransportquerschnitt. Dieser Flüssigkeitstransportquerschnitt ist größer als der Flüssigkeitstransportquerschnitt in dem vorhergehenden Kanalabschnitt. Am Übergang von Kanalabschnitt zu Ventilabschnitt sind die Querschnitte bevorzugt gleich, wobei der Querschnitt des Ventilabschnitts an der Einlassöffnung der Kammer größer ist als am Übergang zum Kanalabschnitt. Als Flüssigkeitstransportquerschnitt wird der Querschnitt des Kanals der Kanalstruktur verstanden, der von der zu transportierenden Flüssigkeit senkrecht durchströmt wird. Bei einem im Querschnitt kreisförmig ausgebildeten Kanal ist der Flüssigkeitstransportquerschnitt gleich der von dem Radius des Kanals aufgespannten Fläche. Bei einem rechteckförmigen Kanal wird der Flüssigkeitstransportquerschnitt durch die von der Höhe und der Breite des Kanals aufgespannt Fläche gebildet.

Ein derartiger Kanal mit einem sich im Ventilabschnitt vergrößernden Flüssigkeitstransportquerschnitt bietet den Vorteil, dass Flüssigkeitsreste aus dem Ventil so entleert werden, dass der Kanal zuverlässig entlüftet werden kann und hierdurch eine Mehrfachnutzung des Kanals möglich wird. Insbesondere bei den mehrstufigen Analyseprozessen, bei denen detergenzhaltige Waschpufferlösungen eingesetzt werden, die zu einer sogenannten Seifenhautbildung am Ventil neigen, wird durch die Vergrößerung der Querschnittsfläche zur Kammer hin ein Verschließen des Kapillarkanals durch eine Seifenhaut vermieden und eine sichere Entlüftung auch bei Mehrfachbefüllung des Kanals gewährleistet. Es wurde erkannt, dass grundsätzlich die Bildung einer Seifenhaut auch dadurch vermieden werden könnte, dass der Querschnitt der Kapillare deutlich vergrößert wird. Allerdings würde eine deutliche Querschnittsvergrößerung dazu führen, dass die Füllzeiten der heberförmigen Kapillare auf Grund der geringen Kapillarkraft sehr lange wären, die in einem derart großen Kapillare wirkt. Darüber hinaus würde der Kanal ein größeres "Todvolumen" aufweisen, da mehr Flüssigkeit in dem Kanal verbleibt. Dies steht jedoch dem Wunsch nach möglichst kleinen Probenmengen entgegen. Eine Befüllung von großen Kapillaren weist zudem den Nachteil auf, dass sich Luftblasen innerhalb solcher Kanäle leichter ausbilden.

Im Rahmen der Erfindung wurde erkannt, dass die technische Umsetzung mit der obigen Kanalstruktur und einem sich aufweitenden Ventilabschnitt am Übergang zur nachfolgenden Kammer eingesetzt werden kann, um den Verbleib von Restflüssigkeit am Ende der Kapillare im Wesentlichen zu verhindern. Generell besteht bei Kanalstrukturen, bei denen zwei Kammern mit einem Kapillarkanal verbunden sind, das Problem, dass am Ende von Kapillarkanälen, insbesondere von heberförmigen oder siphonartigen Kapillaren, Restflüssigkeiten verbleiben können. Die Restflüssigkeit kann in einer unvollständigen Entleerung oder in einem Zusammenfließen von Flüssigkeit begründet sein, die durch Adhäsion an der Kapillarwand haften bleibt. Beim Entleervorgang nimmt der Druck auf die Flüssigkeitssäule in dem Teil der heberförmigen Kapillare (Heber), der in die nächste Kammer übergeht, ab. Ist die Vorlagekammer (erste Kammer in Strömungsrichtung) leer und befindet sich noch Restflüssigkeit in der an die Vorlagekammer anschließenden Heberkapillare, so wird ein kritischer Punkt erreicht. Im Idealfall würde der Flüssigkeitsrest auch noch vollständig bis in die nächste Kammer entleert. Dies ist bei bekannten mikrofluidischen Elementen jedoch nicht immer der Fall.

Es wurde erkannt, dass die Güte der Restentleerung bei einem gegebenen Druck, entscheidend von der Gestaltung des Übergangs des Kanals in die nächste Kammer abhängt. Existieren hier Kanten und Stellen mit abrupten Oberflächenaufweitungen, wie es bei einem normalen Heberübergang zur nachfolgenden Kammer der Fall ist, ist ein gewisses Energieniveau notwendig, damit die Flüssigkeit diese Übergangs-Stelle (Sprungstelle) passieren kann. Dies ist so lange unkritisch, wie sich in der Vorlagenkammer noch ausreichend Flüssigkeit befindet. Nimmt der Druck gegen Ende der Entleerung ab, so wird die Flüssigkeitssäule am Übergang labil und reißt mehr oder weniger reproduzierbar ab. Diese Restflüssigkeit wird dann kapillar im Heber festgehalten und ist sehr schwer zu entfernen, da durch die reduzierte "Mini"-Flüssigkeitssäule nur ein sehr geringer Druck aufgebaut werden kann. Eine Neubefüllung des Hebers ist aufgrund fehlender Entlüftungsmöglichkeit unmöglich. Durch die erfindungsgemäße Aufweitung des Kanals verbleibt jedoch keine Restflüssigkeit in der Kanalstruktur, insbesondere nicht im geweiteten Ventilabschnitt. Abrupte räumliche Übergänge werden vermieden.

Dieser erfindungsgemäße Kapillarkanal mit aufgeweitetem Ventilabschnitt eliminiert also die Probleme im Stand der Technik und verhindert zuverlässig die Bildung oder Stabilisierung von Seifenhaut und den Verbleib von Restflüssigkeit in der Kapillare und somit ein Verschließen des Kapillarkanals. Zusätzlich kann optional der Kapillarkanal so gestaltet werden, dass einerseits Kanten und Stellen mit abrupten Oberflächenaufweitungen vermieden werden (z.B. durch Verrundung) und optional die Kapillare in der Nähe einer nachfolgenden Kammerwand platziert wird.

Die erfindungsgemäße Ausgestaltung des Ventilabschnitts weist den weiteren Vorteil auf, dass die gesamte Kanalstruktur nach wie vor in bekannter Spritzgusstechnik hergestellt werden kann. Es müssen keine zusätzlichen externen Elemente eingesetzt werden, was zum einen die Materialkosten gering hält und zum anderen den Herstellungsprozess kostengünstig macht. Im Vergleich zu den bekannten federbelasteten Ventilen mit einer Verschlusskugel ergibt sich durch die einfache geometrische Gestaltung ein großer Kostenvorteil in der Herstellung.

In einer bevorzugten Ausgestaltung kann die Aufweitung des Flüssigkeitstransportquerschnitts dadurch erfolgen, dass die Seitenwände in dem Ventilabschnitt nicht parallel verlaufen, sondern sich zur Einlassöffnung der Kammer hin aufweiten. Der Abstand der Ventilabschnitt-Seitenwände an der Einlassöffnung der Kammer ist somit größer als ihr Abstand am Übergang von Ventilabschnitt und Kanalabschnitt. Bevorzugt weitet sich der Ventilabschnitt in Strömungsrichtung der Flüssigkeit kontinuierlich auf. Besonders bevorzugt ist eine stetige Aufweitung. Prinzipiell ist auch eine treppenartige Aufweitung möglich, solange die sprungförmigen Querschnittsänderungen nicht so groß sind, dass eine derartige Änderung als Kapillarstop wirkt.

In einer bevorzugten Ausführungsform kann der Ventilabschnitt eine konstante Höhe aufweisen. Die Aufweitung des Flüssigkeitstransportquerschnitts wird dann ausschließlich durch die Vergrößerung des Abstands der Seitenwände verwirklicht. Alternativ dazu oder zusätzlich kann die Vergrößerung des Flüssigkeitstransportquerschnitts durch eine Vergrößerung der Höhe erfolgen, indem sich die Höhe in dem Ventilabschnitt zur Einlassöffnung der Kammer hin vergrößert.

Im Rahmen der Erfindung wurde erkannt, dass vorzugsweise der Abstand der Ventilabschnitt-Seitenwände an der Einlassöffnung der Kammer wenigstens doppelt so groß ist wie der Abstand der Ventilabschnitt-Seitenwände am Übergang zum Kanalabschnitt. Bevorzugt ist der Abstand der Seitenwände an der Einlassöffnung wenigstens dreimal so groß, besonders bevorzugt wenigstens viermal so groß wie der Abstand der Seitenwände am Kanalabschnitt. Alternativ oder zusätzlich kann sich die Höhe in gleichem Maß verändern.

Da die Kammer im Vergleich zum Ventilabschnitt eine deutlich größere Breite und Höhe aufweist, arbeitet der Ventilabschnitt zuverlässig als Kapillarstop, so dass kapillar strömende Flüssigkeit an der Einlassöffnung der Kammer gestoppt wird. Die Höhe der Kammer ist vorzugsweise wenigstens doppelt so groß wie die Höhe des Kanals. Solange auf eine in den Kanal einströmende Flüssigkeit lediglich Kapillarkräfte wirken, füllen sich der Kanalabschnitt und der Ventilabschnitt des Kapillarkanals mit Flüssigkeit. Die Flüssigkeit bleibt in dem Kanal stehen und strömt nicht selbsttätig in die sich anschließende Kammer ein. Erst das zusätzliche Einwirken einer Kraft lässt die Flüssigkeit in die Kammer strömen. Eine geeignete (externe) Kraft kann zum Beispiel durch eine externe Pumpe erzeugt werden oder die Zentrifugalkraft sein, die durch Rotation des mikrofluidischen Elements erzeugt wird. Durch eine geeignete Geometrie des Ventilabschnitts wird bei rotierenden fluidischen Elementen die Durchbruchsfrequenz des Ventilabschnitts eingestellt. Die Durchbruchfrequenz ist die Frequenz, bei der der Kapillarstop die Flüssigkeit nicht mehr zurückhält, sondern das Ventil öffnet. Sobald die Durchbruchfrequenz überschritten wird, entleert sich der Kapillarkanal. Flüssigkeit strömt aus dem Kanal in die Kammer. Bei nicht rotierenden Systemen ist die externe Kraft entsprechend einzustellen.

Die Aufweitung des Ventilabschnitts zur Einlassöffnung der Kammer hin stellt sicher, dass auch der letzte Flüssigkeitsrest aus dem Kanal strömt. Bevorzugt wird das Ausströmen des Flüssigkeitsrests dadurch unterstützt, dass die Einlassöffnung in der Kammerwand nahe einer Kammerseitenwand angeordnet ist. Der Ventilabschnitt ist bevorzugt so anzuordnen, dass eine der Ventilabschnittseitenwände nahe der Kammerseitenwand auf die Kammerwand trifft. Der Austritt der Restflüssigkeit aus dem Kanal wird unterstützt, da die Seitenwand die Flüssigkeitsreste durch Adhäsionskräfte bzw. die schon an die Seitenwand geflossene Flüssigkeit durch Kohäsionskräfte die Restflüssigkeit in die Kammer hineinzieht. Eine sich in dem Ventilabschnitt ausbildende Seifenhaut wird ebenfalls durch die benachbarte Seitenwand "angezogen", so dass sich die Seifenhaut nicht stabilisieren kann und derart aufgeweitet wird, dass sie zerstört wird. Der Abstand der Ventilabschnitt-Seitenwand zu der Kammerseitenwand beträgt vorteilhafterweise höchstens der doppelten Breite des Kanalabschnitts. Vorzugsweise ist ihr Abstand höchstens gleich der Breite des Kanalabschnitts, sehr bevorzugt höchstens der halben Breite oder einem Viertel der Breite des Kanalabschnitts.

In einer alternativen bevorzugten Ausgestaltung des mikrofluidischen Elements ist in dem Ventilabschnitt zwischen den beiden Ventilabschnitt-Seitenwänden ein Steg derart angeordnet, dass zwei nebeneinander angeordnete Ventilabschnitt-Teilkanäle gebildet werden. Bevorzugt sind die Teilkanäle unterschiedlich groß. Der Steg ist bevorzugt so auszubilden, dass die Flüssigkeitstransportquerschnitte der beiden Teilkanäle im Bereich der Einlassöffnung in die Kammer in Summe größer sind als der Flüssigkeitstransportquerschnitt im Kanalabschnitt. In einer besonderen Ausführungsform sind die Flüssigkeitstransportquerschnitte der beiden Teilkanäle in Summe wenigstens doppelt so groß wie der Flüssigkeitstransportquerschnitt im Kanalabschnitt. Beispielsweise kann der Querschnitt jedes Teilkanals so groß sein wie der Querschnitt des Kanalabschnitts. Bevorzugt weitet sich (zusätzlich) wenigstens einer der beiden Teilkanäle zur Kammer hin auf. Der Steg wird vorzugsweise durch ein sich zur Kammer hin vergrößerndes Teilstück aus dem Substrat des mikrofluidischen Elements gebildet.

Bevorzugt schließen die beiden Teilkanäle einen Winkel von wenigstens 40 Grad zueinander ein. Es hat sich als vorteilhaft erwiesen, wenn der Winkel zwischen den beiden Teilkanälen wenigstens 50 Grad, besonders bevorzugt wenigstens 60 Grad aufweist. Unter strömungsfluidischen Aspekten ist es vorteilhaft, wenn der eine Ventilabschnitt-Teilkanal mit dem Kanalabschnitt im Wesentlichen fluchtet. Dieser Teilkanal wird Haupt-Teilkanal genannt. Seine Breite entspricht bevorzugt im Wesentlichen der Breite des Kanalabschnitts des Kanals. Der zweite Teilkanal weitet sich in Strömungsrichtung auf.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Die beispielhafte Beschreibung erfolgt für ein rotierendes mikrofluidisches Element und einem rotierenden Testträger.

Selbstverständlich können die bevorzugten Ausgestaltungen auch bei nicht rotierenden Testträgern eingesetzt werden. Es zeigen:
- Figur 1: ein mikrofluidisches Element mit einer Leitungsstruktur,
- Figur 2: eine Skizze eines Zentrifugalgeräts mit einem Testträger,
- Figur 3: einen Ausschnitt des Leitungssystems aus Figur 1 mit einer Kanalstruktur,
- Figur 4a, b: je einen Ausschnitt der Kanalstruktur mit einem Kanal und einem Ventilabschnitt,
- Figur 5: einen weiteren Ausschnitt der Kanalstruktur mit einem Kanal und einer Kammer,
- Figur 6: einen Querschnitt durch den Ausschnitt der Kanalstruktur aus Figur 5,
- Figur 7: eine alternative Ausführungsform einer Kanalstruktur mit einem Ventilabschnitt,
- Figur 8: eine Detailansicht des Ventilabschnitts aus Figur 7,
- Figur 9: eine Detailansicht des Ventilabschnitts aus Fig. 8.

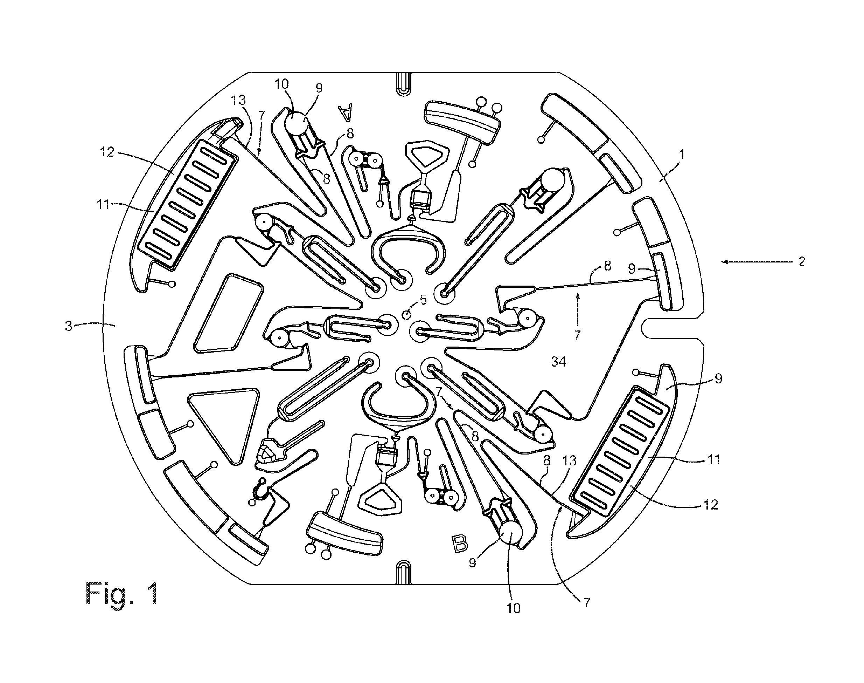

Fig. 1 zeigt ein Ausführungsbeispiel eines mikrofluidischen Elements 1 für die In-Vitro-Diagnostik mit einem Leitungssystem 2. Das Leitungssystem 2 ist von einem Substrat 34 des mikrofluidischen Elements 1 und einer nicht dargestellten Deckschicht umschlossen. Das Substrat 34 besteht beispielsweise aus Kunststoffmaterial wie COC (Cyclo-Olephin-Copolymer), PMMA (Polymethylmethacrylat), Polycarbonat oder Polystyrol. In dem gezeigten Beispiel ist das mikrofluidische Element 1 als rotierender Testträger 3, beispielsweise in Form einer Rotationsscheibe ausgebildet.

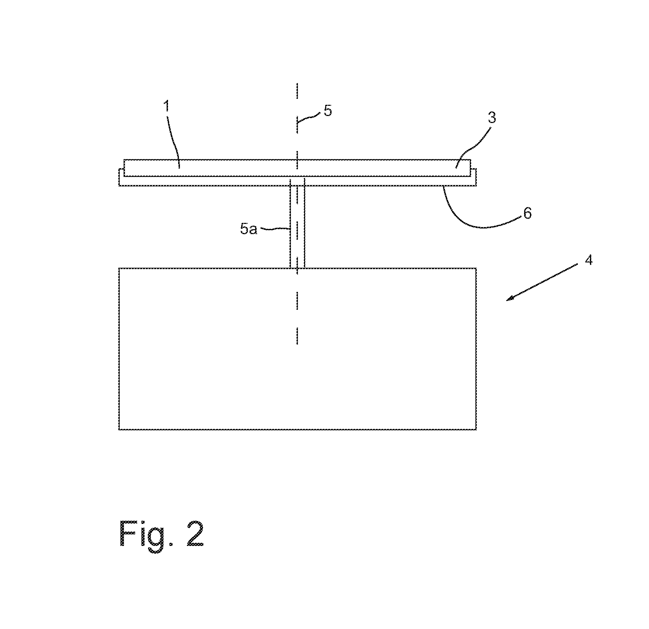

Der Testträger 3 wird beispielsweise in einer in Fig. 2 gezeigten Zentrifugalvorrichtung 4 gehalten und rotiert um eine Rotationsachse 5. Die Zentrifugalvorrichtung 4 weist eine Halterung 6 auf, die den Testträger 3 hält und die am Ende einer drehbar gelagerten Rotationswelle 5a angeordnet ist. Die Rotationswelle 5a ist konzentrisch zu der Rotationsachse 5 angeordnet. In der hier gezeigten Ausführungsform erstreckt sich die Rotationsachse 5 durch den Mittelpunkt des Testträgers 3. Selbstverständlich sind andere Ausführungen des mikrofluidischen Elements 1 möglich, bei dem sich die Rotationsachse nicht durch den Mittelpunkt des Elements 1 oder nicht durch das Element 1 erstreckt.

Die Ausbildung des mikrofluidischen Elements 1 als rotierender Testträger 3 ist eine mögliche Ausführungsform, um eine externe Kraft zur Steuerung einer Flüssigkeit in dem Leitungssystem 2 zu erzeugen. Anstelle der Zentrifugalkraft können beispielsweise auch extern erzeugte Druckkräfte verwendet werden.

Das hier gezeigte mikrofluidische Element 1 dient zur Blutuntersuchung. Dabei werden mehrere Prozessschritte hintereinander durchgeführt, wobei Teile oder Bereiche des Leitungssystems 2 im Prozessablauf mehrmals verwendet werden. Eine Trocknung der Kanäle des Leitungssystems 2 zwischen den Prozessschritten ist nicht möglich, so dass das mikrofluidische Element 1 und das darin enthaltene Leitungssystem 2 sicherstellen müssen, dass auch bei einer Mehrfachbefüllung einzelner Kanäle des Leitungssystems 2 ein sicherer Prozessablauf möglich ist und insbesondere keine unerwünschten Lufteinschlüsse durch Zurückbleiben von Restflüssigkeit entstehen.

Das Leitungssystem 2 umfasst mehrere Kanalstrukturen 7, die jeweils wenigstens einen Kanal 8 und eine Kammer 9 umfassen. Eine der Kanalstrukturen 7, die mehrfach benutzt wird, umfasst eine als Waste-Kammer 12 ausgebildete Kammer 11 und einen Kanal 13, der sich zwischen einer Messkammer 10 zur Untersuchung der Probenflüssigkeit und der Waste-Kammer 12 erstreckt. Die Waste-Kammer 12 dient als Abfallreservoir für überschüssige oder nicht mehr benötigte Flüssigkeit.

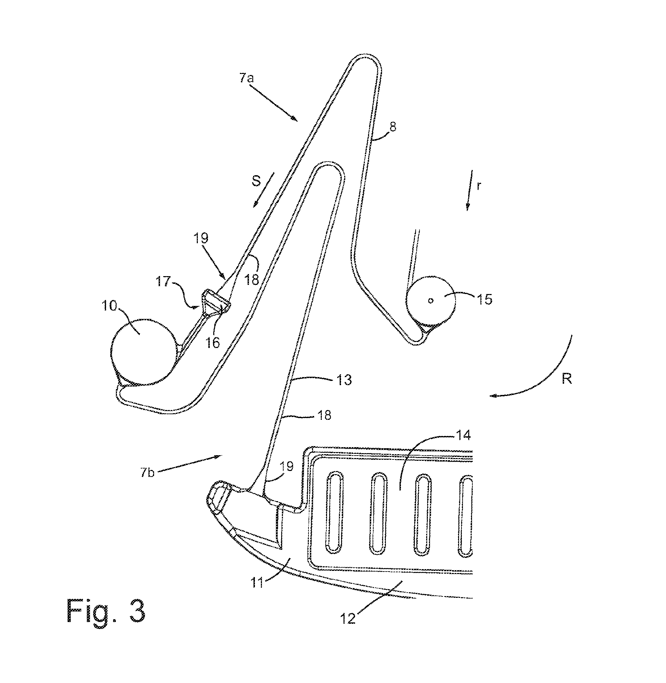

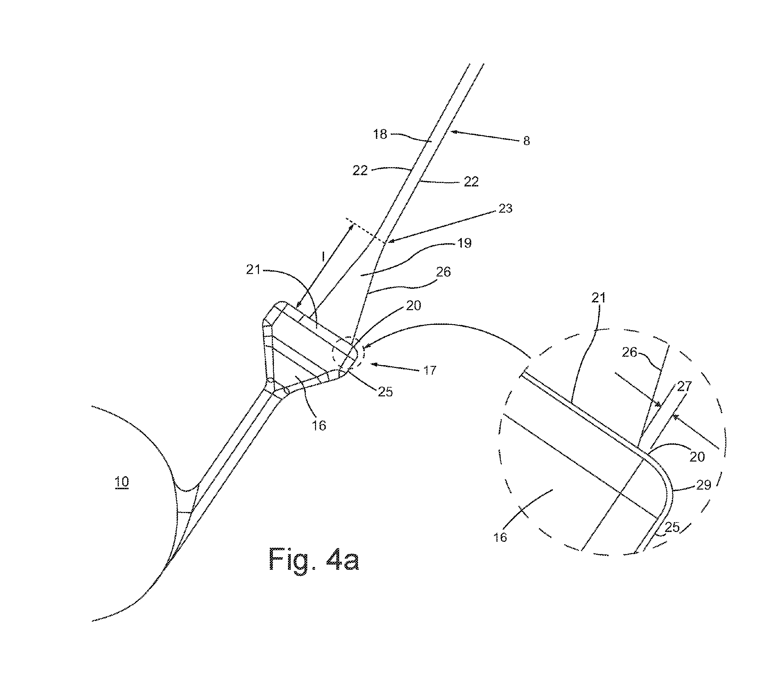

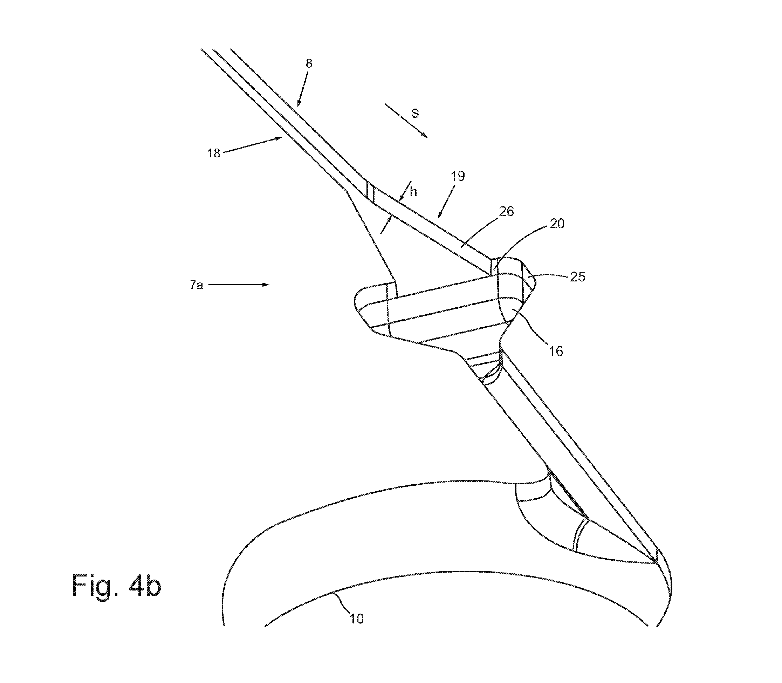

Fig. 3 und 4a, 4b zeigen einen Ausschnitt des Leitungssystems 2 aus Fig. 1 mit zwei Kanalstrukturen 7a, 7b. Die hier beschriebenen Ausführungen beschränken sich nicht auf rotierende Testträger, sondern können in allen Testträgern mit Leitungssystemen verwendet werden, in denen mikrofluidische Kanäle mehrfach befüllt werden. Die Kanalstruktur 7a umfasst eine Sammelkammer 15 und eine Messkammer 10 sowie einen zwischen Sammelkammer 15 und Messkammer 10 angeordneten fluidischen Kanal 8 mit einer siphonartigen Form. Ein derartiger Kanal wird als Heber bezeichnet. Die Kanalstruktur 7b schließt die Messkammer 10, den siphonförmigen Kanal 13 sowie die Waste-Kammer 12 ein, die nur teilweise gezeigt ist. Sie enthält in einer speziellen Ausführungsform ein Vlies 14, das die in die Kammer einströmende Flüssigkeit aufsaugt. In der Messkammer 10 erfolgen die notwendigen Reaktionen zur Analyse einer Probenflüssigkeit. Sie kann beispielsweise Mikroarrays mit immobilisierten Antikörpern umfassen. Aus Gründen der Übersichtlichkeit sind beispielsweise Entlüftungsöffnungen in den Kammern nicht gezeigt.

Eine Kanalstruktur 7, 7a, 7b schließt hier also immer eine erste Kammer und eine zweite Kammer sowie einen die Kammern verbindenden Kanal (Kapillarkanal) ein. Bevorzugt ist der Kanal einer derartigen Kanalstruktur siphonartig geformt, also ein so genannter Heber.

Teil der Kapillarstruktur 7a ist eine Zwischenventilkammer 16, die sich an den Kanal 8 anschließt. Die Figuren 4a, 4b zeigen Detailansichten der Zwischenventilkammer 16 und des Kanals 8, wobei Figur 4b eine isometrische Ansicht darstellt. Diese Zwischenventilkammer 16 stellt ein geometrisches Ventil dar, das einen Kapillarstop 17 bildet, so dass in dem Kanal 8 durch die Kapillarwirkung transportierte Flüssigkeit vor der Zwischenventilkammer 16 zum Stillstand kommt. Der Kanal 8 wird dabei durch die ausgeübte Kapillarkraft in Strömungsrichtung (Pfeil S) gefüllt.

Bei Rotation des fluidischen Elements 1 in Richtung des Pfeils R wird eine Flüssigkeit radial nach außen verdrängt, im vorliegenden Fall in Richtung des Pfeils r. Sobald die Rotationsfrequenz oberhalb der Durchbruchsfrequenz liegt, das mikrofluidische Element 1 also schnell genug rotiert, öffnet der Kapillarstop 17 und Flüssigkeit kann aus dem Kanal 8 in die Messkammer 10 einströmen. Die Zwischenventilkammer 16 weist eine Kammerwand 20 mit einer Einlassöffnung 21 auf, durch die Flüssigkeit aus dem Kanal 8 in die Zwischenventilkammer 16 strömt.

Der Kanal 8 umfasst einen Kanalabschnitt 18 und einen sich in Strömungsrichtung anschließenden Ventilabschnitt 19. Der Ventilabschnitt 19 weist erfindungsgemäß einen sich in Strömungsrichtung vergrößernden Flüssigkeitstransportquerschnitt auf. Der Flüssigkeitstransportquerschnitt des Ventilabschnitts 19 ist an der Einlassöffnung 21 größer als der Flüssigkeitstransportquerschnitt an dem Übergang vom Kanalabschnitt 18 zum Ventilabschnitt 19.

Die Seitenwände 22 des Kanals 8 verlaufen im Kanalabschnitt 18 vorzugsweise parallel zueinander. Im Ventilabschnitt 19 sind die Seitenwände (Ventilabschnitt-Seitenwände 26) bevorzugt nicht parallel, so dass eine Aufweitung der Kanalbreite erfolgt. Die Höhe h in dem Ventilabschnitt 19 ist konstant, so dass der Kanal 8 insgesamt eine konstante Höhe aufweist. Als Höhe wird dabei die Dimension in Richtung Flächennormale des mikrofluidischen Elements 1 verstanden.

In der hier gezeigten Ausführung ist die Breite des Ventilabschnitts 19 an der Einlassöffnung 21 (Abstand der Seitenwände 22) dreimal so groß wie die Breite des Kanals 8 am Übergang 23 vom Kanalabschnitt 18 zum Ventilabschnitt 19.

Im Rahmen der Erfindung wurde erkannt, dass die Länge I des Ventilabschnitts 19 bevorzugt wenigstens dreimal so groß ist wie der Abstand der Seitenwände 22 am Kanalabschnitt 18, bevorzugt dreimal so groß ist wie der Abstand der Seitenwände 22 am Übergang 23 vom Kanalabschnitt 18 zum Ventilabschnitt 19. Besonders bevorzugt hat sich eine Länge I des Ventilabschnitts 19 erwiesen, die wenigstens dem Fünffachen des Abstands der Seitenwände 22 am Übergang 23 entspricht. Bei einer Länge, die dem Siebenfachen des Abstands der Seitenwände 22 entspricht, haben sich besonders gute Eigenschaften des Ventilabschnitts ergeben.

Bei einem Ventilabschnitt 19, dessen Länge höchstens dem Zehnfachen des Abstands der Seitenwände 22 am Übergang 23 entspricht, werden der Kanal 8 und die Sammelkammer 15 zuverlässig geleert, ohne dass eine Restflüssigkeit in der Kanalstruktur 7a verbleibt. Bei der Verwendung einer Waschpufferlösung wird eine Bildung von Seifenhäuten am Ausgang des Ventilabschnitts 19 zuverlässig verhindert, so dass eine Belüftung des Kanals 8 gegeben ist.

Die vollständige Entleerung des Kanals 8 einschließlich Ventilabschnitt 19 und Kanalabschnitt 18 wird bevorzugt dadurch weiter verbessert, dass der Ventilabschnitt 19 unsymmetrisch an der Kammerwand 20 der Zwischenventilkammer 16 angeordnet ist. Eine der Seitenwände 22 ist näher an einer sich an die Kammerwand 20 anschließende Kammerseitenwand 25 angeordnet. Die Kammerseitenwand 25 schließt mit der Kammerwand bevorzugt einen Winkel von wenigstens 80 bis 170 Grad ein, hier einen Winkel von 90 Grad. Bevorzugt ist eine der Ventilabschnitt-Seitenwände 26 so in der Nähe der Kammerseitenwand 25 angeordnet, dass der Abstand 27 zwischen ihr und der Kammerseitenwand 25 höchstens gleich der Breite des Kanalabschnitts 18, bevorzugt des Abstands der Seitenwände 22 am Übergang 23 ist. Im Rahmen der Erfindung wurde erkannt, dass eine möglichst nahe Anordnung einer der Ventilabschnitt-Seitenwände 26 an der Kammerseitenwand 25 vorteilhaft für die Restentleerung ist. Beispielsweise kann der Abstand 27 höchstens der halben Breite des Kanals 8 am Übergang 23, bevorzugt höchstens einem Drittel dieser Breite entsprechen.

Bevorzugt wird der Abstand 27 zwischen der Ventilabschnitt-Seitenwand 26 und der Kammerseitenwand 25 bis zur Verrundung 29 der Kammerwand 20 gerechnet. Dieser Abstand 27 soll bevorzugt maximal ein Drittel der Breite des Kanals 8 am Übergang 23 sein. Bei einer Kanalbreite von 0,2 mm ergibt sich für den Abstand 27 eine maximale Ausdehnung von 0,06 mm.

Durch Wahl der entsprechenden Drehrichtung (Pfeil R) kann bewirkt werden, dass während der Rotation auftretende Corioliskräfte und während der Beschleunigung auftretende Eulerkräfte, welche der Rotationsrichtung entgegengesetzt sind, die Flüssigkeitsprobe beim Transport von Ventilabschnitt 19 zu Kammer 16 an deren nahe liegende Wand 25 gedrückt wird. Insbesondere diese Tatsache bewirkt eine komplette Restentleerung von Ventil 19 und eine damit sichergestellte Wiederbefüllbarkeit des Kanals 18.

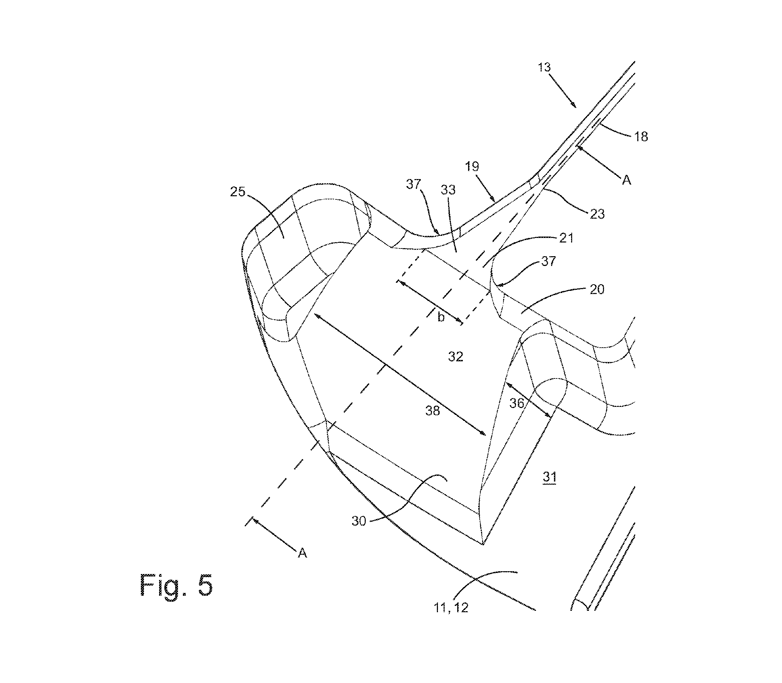

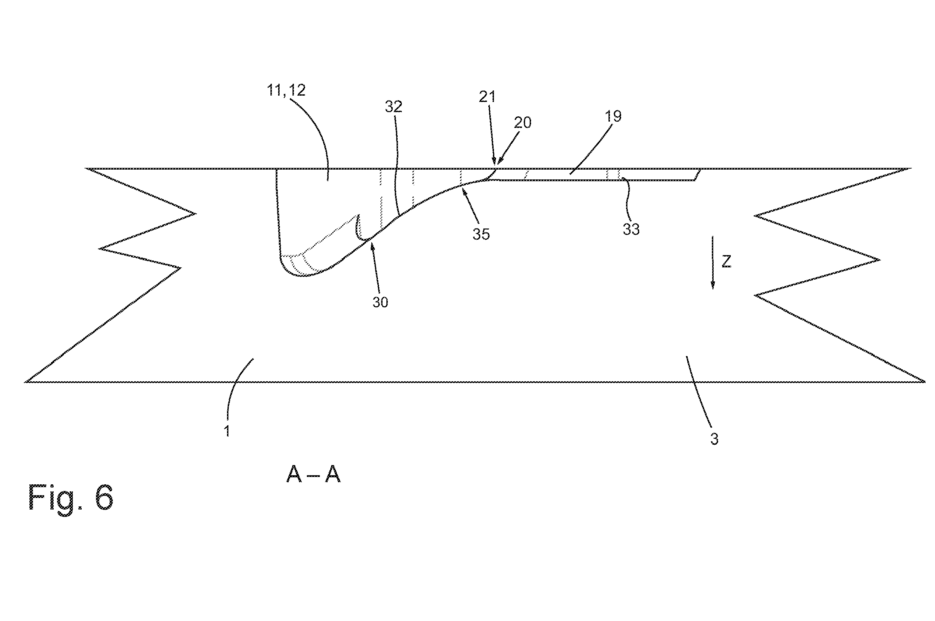

Die Kanalstruktur 7b aus Figur 3, die den Kanal 13 und die Waste-Kammer 12 mit einer nicht gezeigten Lüftungsöffnung umfasst, ist ebenfalls als Siphonstruktur ausgebildet und erfüllt eine Heberfunktion zur Steuerung des Flüssigkeitstransports. Die Figuren 5 und 6 zeigen einen Detailausschnitt des Kanals 13 mit dem Kanalabschnitt 18 und dem Ventilabschnitt 19. Der trompetenförmige Ventilabschnitt 19 weitet sich in Strömungsrichtung auf. Sein Flüssigkeitstransportquerschnitt ist an der Einlassöffnung 21 in der Kammerwand 20 größer als am Übergang 23. Der Ventilabschnitt 19 ist bei dieser Ausführungsform nicht an einer Kammerseitenwand 25 der Waste-Kammer 12 angeordnet. Um die vollständige Entleerung des Kanals 13 zu gewährleisten, weist hier die Waste-Kammer 12 eine Rampe 30 auf, die am Boden 31 der Waste-Kammer 12 angeordnet ist und sich von der Einlassöffnung 21 an der Kammerwand 20 weg erstreckt. Dabei verringert sich die Höhe 36 der Rampe 30 mit wachsender Entfernung von der Kammerwand 20. Die Oberseite 32 der Rampe 30 schließt bündig an den Boden 33 des Ventilabschnitts 19 an, so dass ein stetiger Übergang gebildet wird, wie in Fig. 5 und dem in Fig. 6 gezeigten Schnitt A-A aus Fig. 5 gezeigt ist. Die Rampe 30 ist ebenfalls in Spritzgusstechnik in dem Substrat 34 des mikrofluidischen Elements 1 bzw. Testträgers 3 realisiert. Ihre Herstellung ist deshalb mit keinen weiteren Kosten verbunden.

Durch den stetigen Übergang des Bodens von dem Ventilabschnitt 19 über die Rampe 30 in die Waste-Kammer 12, wird die Entleerung des Ventilabschnitts 19 und des Kanals 8 ebenso verbessert, wie die Anordnung des Ventilabschnitts 19 nahe einer Kammerseitenwand 25 bei der vorhergehend beschriebenen Ausführungsform, Fig. 4a, b.

Bevorzugt ist die Rampe 30 so ausgebildet, dass ihre Oberseite 32 plan ist. Alternativ ist sie gekrümmt. Der vom Boden 33 des Ventilabschnitts 19 und der Oberseite 32 der Rampe 30 gebildete "tangentiale" Übergang (Verrundung 35) ist bevorzugt verrundet mit einem Rundungsradius in Z-Richtung (vgl. Fig. 6), der bevorzugt zwischen 1,25 mm und 2,25 mm liegt. Im vorliegenden Beispiel beträgt der Radius der Verrundung 35 1,75 mm.

In einer bevorzugten Ausführungsform ist der Ventilabschnitt 19 derart ausgebildet, dass die Ventilabschnitt-Seitenwände 26 wenigstens abschnittsweise gerade verlaufen. Am Ende des Ventilabschnitts 19 zur Einlassöffnung 21 hin hat sich bei praktischen Untersuchungen eine Verrundung 37 im Übergang zur Kammerwand 20 als vorteilhaft erwiesen. Die Verrundung 37 in X-Y-Richtung weist bevorzugt einen Rundungsradius zwischen 0,5 mm und 1 mm auf, in der gezeigten Ausführungsform beträgt er 0,65 mm.

Vorteilhaft ist eine Rampe 30, deren Breite 38 größer als die Breite b der Einlassöffnung 21 ist. Bevorzugt ist die Rampe wenigstens 10 % bis 50 % breiter als die Einlassöffnung 21; besonders bevorzugt ist sie doppelt so breit. Im Rahmen der Erfindung wurde herausgefunden, dass eine Rampe 30 mit einer Breite 38, die dreimal so groß ist wie die Breite b der Einlassöffnung 21, sich ebenfalls als vorteilhaft erwiesen hat. Allerdings sollte die Breite der Rampe 30 höchstens fünfmal so groß sein wie die Breite b der Einlassöffnung 21 (ohne Verrundung 37). Da die Rampe 30 die Einlassöffnung 21 seitlich überlappt, ist eine seitliche Verrundung der Rampe nicht notwendig. Es hat sich als vorteilhaft erwiesen, dass die Seiten der Rampe 30 einen abrupten Übergang zum Kammerboden 31 der Waste-Kammer 12 bilden. Auf diese Weise wird ein Rückfließen von Flüssigkeit aus der Waste-Kammer 12 in den Ventilabschnitt 19 verhindert.

Durch Verwendung der Rampe 30 in der Waste-Kammer 12 wird ebenfalls eine sich im Ventilabschnitt 19 bildende Seifenhaut "in die Kammer hineingezogen", so dass die Seifenhaut zerstört wird. Flüssigkeitsreste aus dem Kanal 13 werden durch Kohäsionskräfte über die Rampe 30 abgeleitet.

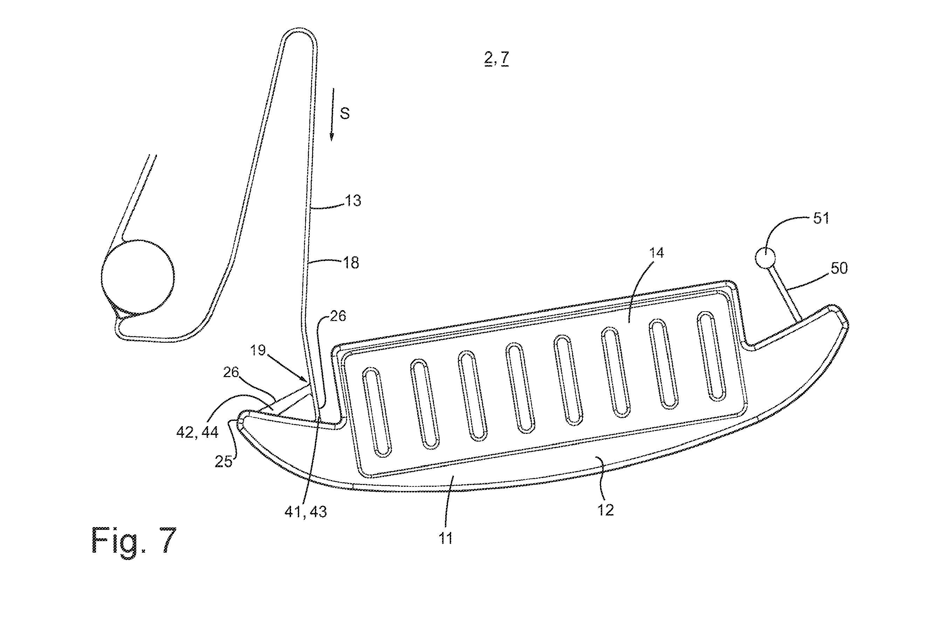

Fig. 7 zeigt einen Ausschnitt aus dem Leitungssystem 2 des mikrofluidischen Elements 1 mit einer alternativen erfindungsgemäßen Kanalstruktur 7. Sie umfasst einen Kanal 13 und eine Waste-Kammer 12 mit einem optionalen Vlies 14. Die Waste-Kammer 12 hat an ihrem Ende einen Entlüftungskanal 50 mit einer Entlüftungsöffnung 51, durch die Luft aus der Waste-Kammer 12 und der Kanalstruktur 7 entweichen kann. Der Kanal 13 umfasst einen Kanalabschnitt 18 und einen sich daran anschließenden Ventilabschnitt 19, der mit der Waste-Kammer 12 einen Kapillarstop bildet. Flüssigkeit kann erst in die Waste-Kammer 12 einfließen, wenn der Kapillarstop überwunden wird.

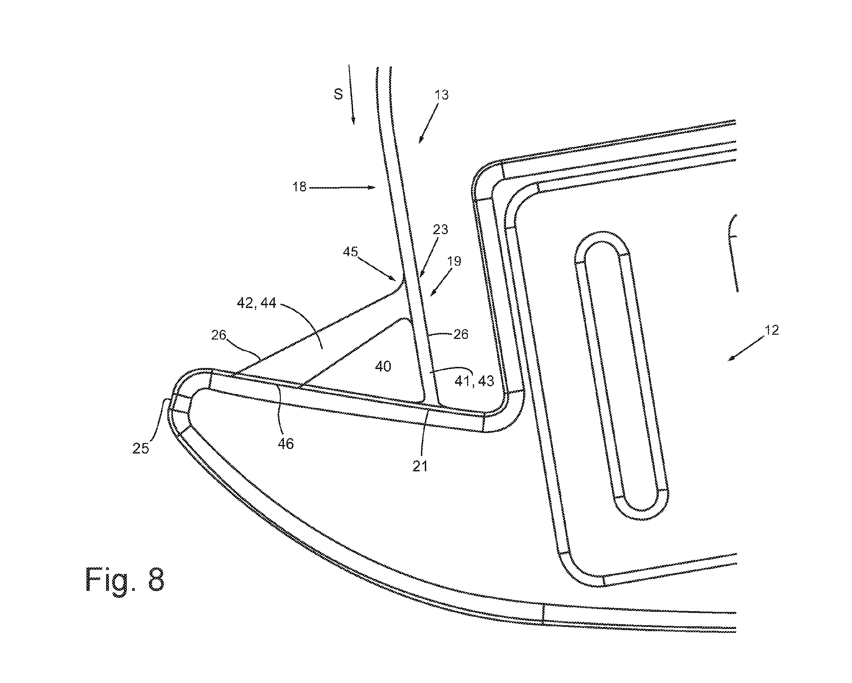

Der Ventilabschnitt 19 weist bevorzugt zwischen den beiden Ventilabschnitt-Seitenwänden 26 einen Steg 40 derart auf, dass zwei nebeneinander angeordnete Ventilabschnittteilkanäle 41, 42 gebildet werden. Auch bei diesem Teilabschnitt 42 des Ventilabschnitts 19 erfolgt eine Aufweitung des Flüssigkeitstransportquerschnitts in Strömungsrichtung S, Fig. 7, 8.

Vorzugsweise bildet der erste Ventilabschnitt-Teilkanal 41 einen Haupt-Teilkanal 43 ist und der zweite Ventilabschnitt-Teilkanal 42 einen Bypass-Teilkanal 44. Die beiden Teilkanäle 41, 42 schließen hier einen Winkel von 65 Grad ein.

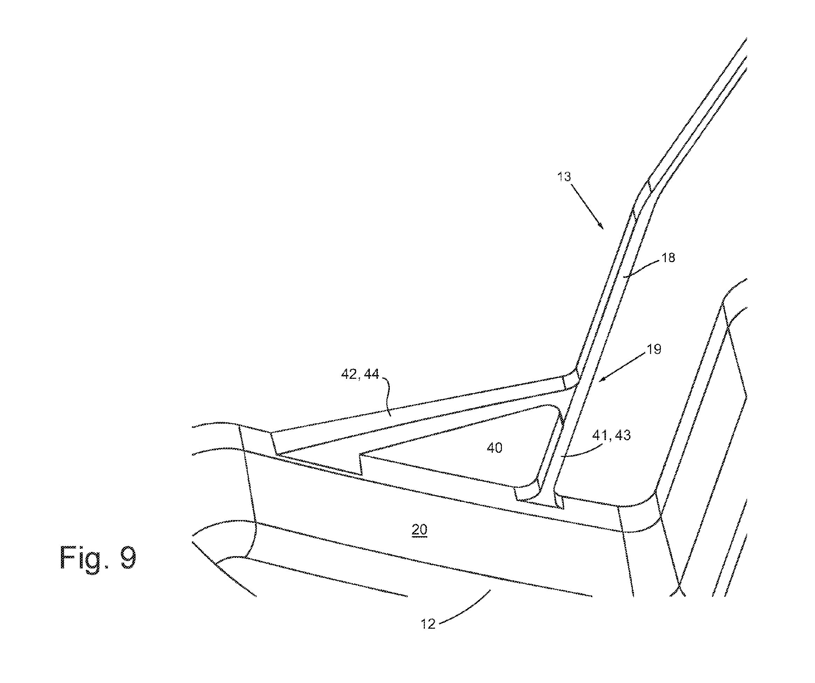

Der Haupt-Teilkanal 43 fluchtet mit dem Kanalabschnitt 18 wie in den Fig. 8, 9 dargestellt. Fig. 9 zeigt eine isometrische Ansicht des Ventilabschnitts. Die Breite und Höhe des Haupt-Teilkanals 43 entsprechen denen des Kanalabschnitts 18. Die Seitenwände des Haupt-Teilkanals 43 sind bevorzugt parallel zueinander angeordnet. Seine Höhe ist bevorzugt zwischen 0,14 mm und 0,2 mm, besonders bevorzugt zwischen 0,15 mm bis 0,18 mm. In dem hier gezeigten Beispiel ist die Höhe des Haupt-Teilkanals 43 gleich 0,15 mm; seine Breite beträgt 0,2 mm.

Der Bypass-Teilkanal 44 ist bevorzugt breiter als der Haupt-Teilkanal 43. Bevorzugt weitet sich der Bypass-Teilkanal 44 von der Verzweigungsstelle 45 zu einer Bypass-Einlassöffnung 46 in der Kammerwand 20 der Waste-Kammer 12 auf. Der Flüssigkeitstransportquerschnitt des Bypass-Teilkanals 44 vergrößert sich folglich in Strömungsrichtung. Die Breite des Bypass-Teilkanals 44 an der Verzweigungsstelle 45 beträgt im vorliegenden Beispiel 0,38 mm, während seine Breite (parallel zur Ventilabschnitt-Seitenwand 26) an der Bypass-Einlassöffnung 46 0,6 mm beträgt. Die Höhe des Bypass-Teilkanals 44 (in Z-Richtung) soll an der Bypass-Einlassöffnung 46 zwischen 0,24 bis 0,3 mm betragen, bevorzugt zwischen 0,25 bis 0,28 mm. In der gezeigten Ausführungsform ist die Höhe 0,25 mm. Die Höhe der Waste-Kammer 12 beträgt im gezeigten Beispiel 1,4 mm.

Die Höhe des Bypass-Teilkanals 44 ist an der Kammerwand 20 bevorzugt größer als die Höhe des Haupt-Teilkanals 43 an der Kammerwand 20 (Fig. 9). Vorzugsweise sind, wie hier gezeigt, die Höhen der beiden Teilkanäle 41, 42 an der Verzweigungsstelle 45 gleich.

In einer Ausführungsform (Fig. 7 bis 9) des Ventilabschnitts 19 trifft der Haupt-Teilkanal 43 in einem Winkel auf die Kammerwand 20 der Waste-Kammer 12, der von 90 Grad verschieden ist. Bevorzugt ist der Haupt-Teilkanal 43 rechtwinklig zu der Kammerwand 20 angeordnet.

Den Fig. 7, 8 ist zu entnehmen, dass der Ventilabschnitt 19 mit Steg 40 unter Ausbildung eines Bypass-Teilkanals 44 bevorzugt derart an der Kammer 12 angeordnet ist, dass der Bypass-Teilkanal 44 näher an der Kammerseitenwand 25 angeordnet ist als der Haupt-Teilkanal 43. Durch die räumliche Nähe des Bypass-Teilkanals 44 zu der Kammerseitenwand 25 werden die gleichen Effekte erzielt, wie bei dem trompetenförmigen Ventilabschnitt. Auch hierdurch wird ein Abriss der Flüssigkeitssäule während der Entleerung verhindert und die Restentleerung zuverlässig gewährleistet.

In der Kanalstruktur 7a (Fig. 3) ist der Ventilabschnitt 19 trompetenförmig in Strömungsrichtung der Flüssigkeit aufgeweitet. Die der Drehrichtung R entgegen gerichtete Seitenwand 26 (rechte Seitenwand) des Ventilabschnitts 19 ist der Kammerseitenwand 25 angenähert. Da das mikrofluidische Element 1 im Uhrzeigersinn gedreht wird (Pfeil R), wird beim Beschleunigen des Elements 1 die in dem Kanal 8 enthaltene Flüssigkeit an die rechte Seitenwand 22 des Kanals 8 gedrückt. Diese Seitenwand 22, 26 ist der Kammerseitenwand 25 angenähert, wodurch die Entleerung des Kanals 8 durch die während der Rotation auftretende Corioliskraft und während der Beschleunigung auftretende Eulerkraft unterstützt und optimiert wird. Eine Entlüftung und somit ein Wiederbefüllen des Kanals 8 ist zuverlässig gewährleistet.

Im Gegensatz dazu ist bei der Ausführungsform des Ventilabschnitts 19 mit Bypass gemäß Fig. 7, 8, 9 der Bypass-Teilkanal 44 der Kammerseitenwand 25 angenähert. Hier erfolgt eine Rotation im Gegenuhrzeigersinn. Durch die während der Rotation auftretende Corioliskraft und während der Beschleunigung auftretende Eulerkraft wird in diesem Falle die Flüssigkeit an die der Ventilabschnittsteilkapillare 42 naheliegende linke Wand 25 der Kammer 11 gedrückt und eine Entleerung des Bypass-Teilkanals 44 gefördert. Die Bildung einer Seifenhaut bei der Verwendung von Waschpufferlösungen wird verhindert. An dem im Verhältnis schmäleren Haupt-Teilkanal 43 des Ventilabschnitts 19 ist eine auftretende Seifenhautbildung unkritisch und nicht störend, da eine Entlüftung des Kanals 13 durch den Bypass-Teilkanal 44 zuverlässig erfolgen kann. Die Entleerung des Kanals 13 als auch der Durchbruch des Ventilabschnitts 19 ab Erreichen einer vorgegebenen Durchbruchfrequenz (Überschreiten der Durchbruchfrequenz durch die Rotationsfrequenz) erfolgt zunächst über den Bypass-Teilkanal 44, der so gestaltet ist, dass er trotz der Erweiterung seines Flüssigkeitstransportquerschnitts kapillar befüllbar bleibt. Der Bypass-Teilkanal 44 ist so konzipiert, dass kein Abriss der Flüssigkeit gegen Ende des Entleerungsvorgangs stattfindet und so eine vollständige Entleerung und damit eine Entlüftung sichergestellt ist. Dadurch kann der siphonartig ausgebildete Heber-Kanal 13 zuverlässig mehrfach genutzt werden.

Der Haupt-Teilkanal 43 dient auf Grund seiner kammerseitenwandfernen Anordnung als Rückflusssperre von Flüssigkeit aus der Kammer 11. Flüssigkeit, die die Kammerwand 20 benetzt und die aus der Waste-Kammer 12 entlang der Kammerwand 20 in Richtung Ventilabschnitt 19 zurückströmt, wird kapillar in den engeren Haupt-Teilkanal 43 geleitet, der auf Grund seines geringeren Querschnitts eine höhere Kapillarwirkung aufweist als der Bypass-Teilkanal 44. Somit wird durch die vorhandenen Kohäsionskräfte die zurückfließende Flüssigkeit in den engeren Haupt-Teilkanal 43 geleitet und gelangt nicht zu dem Bypass-Teilkanal 44. Er verstopft deshalb nicht und wird am Übergang durch ein Zurückfließen von Flüssigkeiten aus der Kammer geschützt, das insbesondere bei zunehmender Befüllung der Waste-Kammer kritisch sein kann.

Im Stillstand des mikrofluidischen Elements gelangt Flüssigkeit aus der Messkammer 10 auf Grund der Kapillarwirkung in den Kanal 13. Dabei wird zunächst der engere Haupt-Teilkanal 43 relativ schnell befüllt. Erst anschließend wird der Bypass-Teilkanal 44 befüllt, wobei seine Befüllung langsamer erfolgt als die Befüllung des Haupt-Teilkanals 43. Durch eine geeignete Gestaltung der beiden Teilkanäle 41, 42, insbesondere durch die Aufweitung des Bypass-Teilkanals 44 und Vorgabe des Winkels zwischen den beiden Teilkanälen 41, 42, ist die Befüllung einstellbar, die im Verhältnis der auftretenden Kapillarkräfte erfolgt.

Sobald das mikrofluidische Element in Drehung versetzt wird, erfolgt zunächst der Durchbruch an dem Bypass-Teilkanal 44. Dies geschieht bereits bei relativ geringen Frequenzen. So besteht in biochemischen Analyseprozessen (Assays) die Möglichkeit, die Kammer auch vorsichtig zu entleeren, um beispielsweise Proteinschädigungen zu vermeiden.

Es hat sich gezeigt, dass mit einem erfindungsgemäß ausgebildeten Ventilabschnitt 19 eine robuste Durchführung mehrerer Prozessschritte (Assayschritte) bei Verwendung der gleichen Kapillare bzw. bei der Verwendung des gleichen Kanals 8, 13 erfolgen kann, ohne dass es zu einer Blockade des Kanals kommt. Die Entlüftung der Kapillare (Kanal 8, 13) ist auch über mehrere Prozessschritte, d. h. über die mehrfache Einleitung von unterschiedlichen Flüssigkeiten, gewährleistet. Dabei können selbst Lösungen mit einer hohen Detergenz-Konzentration eingesetzt werden, ohne dass eine Seifenhautbildung stattfindet bzw. ohne das Reste der Lösung (Flüssigkeit) zusammenlaufen und ein Wiederbefüllung des Kanals verhindern.

## Patentansprüche

1. Mikrofluidisches Element zur Analyse einer Flüssigkeitsprobe mit einem Substrat (34) und einem von dem Substrat (34) und einer Deckschicht umschlossenen mikrofluidischen Leitungssystem (2) mit einer Kanalstruktur (7),
wobei
- die Kanalstruktur (7) einen Kanal (8, 13) mit zwei Seitenwänden (23) und eine Kammer (9, 11) umfasst, die mit dem Kanal (8, 13) in Fluidverbindung steht,
- der Kanal (8, 13) einen Kanalabschnitt (18) und einen sich an den Kanalabschnitt (18) anschließenden Ventilabschnitt (19) umfasst,
- die Kammer (9, 11) eine Kammerwand (20) mit einer Einlassöffnung (21) hat,
- die Einlassöffnung (21) in der Kammerwand (20) derart mit dem Ventilabschnitt (19) in Fluidverbindung steht, dass eine Flüssigkeit aus dem Kanal (8, 13) durch den Ventilabschnitt (19) in die Kammer (9, 11) strömen kann,
- der Ventilabschnitt (19) einen sich in Strömungsrichtung vergrößernden Flüssigkeitstransportquerschnitt aufweist, der größer ist als der Flüssigkeitstransportquerschnitt in dem vorhergehenden Kanalabschnitt (18).

2. Mikrofluidisches Element nach Anspruch 1, **dadurch gekennzeichnet, dass** die Seitenwände (22, 26) in dem Ventilabschnitt (19) derart angeordnet sind, dass sich ihr Abstand in Strömungsrichtung zur Einlassöffnung (21) hin so vergrößert, dass der Abstand der Ventilabschnitt-Seitenwände (22, 26) an der Einlassöffnung (21) größer ist als der Abstand der Kanalabschnitt-Seitenwände (22).

3. Mikrofluidisches Element nach einem der vorhergehenden Ansprüche, **dadurch gekennzeichnet, dass** sich der Ventilabschnitt (19) zur Einlassöffnung (21) hin stetig weitet.

4. Mikrofluidisches Element nach einem der vorhergehenden Ansprüche, **dadurch gekennzeichnet, dass** der Abstand der Seitenwände (22, 26) im Ventilabschnitt (19) an der Einlassöffnung (21) der Kammer (9, 11) wenigstens doppelt so groß ist wie der Abstand der Seitenwände (22) im Kanalabschnitt (18), bevorzugt der Abstand wenigstens dreimal so groß ist, besonders bevorzugt der Abstand wenigstens viermal so groß ist.

5. Mikrofluidisches Element nach einem der vorhergehenden Ansprüche, **dadurch gekennzeichnet, dass** der Ventilabschnitt (19) eine Länge I hat, die wenigstens das Dreifache des Abstands b der Ventilabschnitt-Seitenwände (26) am Übergang vom Kanalabschnitt zum Ventilabschnitt ist, bevorzugt wenigstens das 5-fache des Abstands und besonders bevorzugt wenigstens das 7-fache des Abstands ist, wobei die Länge I höchstens dem 10-fachen des Abstands entspricht.

6. Mikrofluidisches Element nach einem der vorhergehenden Ansprüche, **dadurch gekennzeichnet, dass** der Ventilabschnitt (19) eine konstante Höhe h hat oder eine sich zur Einlassöffnung (21) der Kammer (9, 11) hin vergrößernde Höhe aufweist.

7. Mikrofluidisches Element nach einem der vorhergehenden Ansprüche, **dadurch gekennzeichnet, dass** die Kammer (9, 11) eine Rampe (30) umfasst, die sich von der Einlassöffnung (21) der Kammerwand (20) derart wegerstreckt, dass sich ihre Höhe mit wachsender Entfernung von der Kammerwand (20) verringert.

8. Mikrofluidisches Element nach Anspruch 7, **dadurch gekennzeichnet, dass** die Rampe (30) eine Breite aufweist, die größer als die Breite der Einlassöffnung (21) ist, bevorzugt wenigstens 10% größer ist, sehr bevorzugt wenigstens doppelt so groß, besonders bevorzugt wenigstens dreimal so groß ist, und höchstens fünfmal so groß ist.

9. Mikrofluidisches Element nach einem der vorhergehenden Ansprüche, **dadurch gekennzeichnet, dass**
- die Kammer (9, 11) eine sich an die Kammerwand (20) anschließende Kammerseitenwand (25) umfasst,
- der Ventilabschnitt (19) derart an der Kammerwand (20) angeordnet ist, dass eine der Ventilabschnitt-Seitenwände (26) so in der Nähe der Kammerseitenwand (25) angeordnet ist, dass der Abstand (27) zwischen ihr und der Kammerseitenwand (25) höchstens gleich der Breite des Kanalabschnitts (18), bevorzugt höchstens gleich der halben Breite des Kanalabschnitts (18) ist und besonders bevorzugt höchstens gleich einem Drittel der Breite des Kanalabschnitts (18) ist.

10. Mikrofluidisches Element nach einem der vorhergehenden Ansprüche, **dadurch gekennzeichnet, dass** in dem Ventilabschnitt (19) zwischen den beiden Ventilabschnitt-Seitenwänden (26) ein Steg (40) derart angeordnet ist, dass zwei nebeneinander angeordnete Ventilabschnitt-Teilkanäle (41, 42) gebildet werden.

11. Mikrofluidisches Element nach dem vorhergehenden Anspruch, **dadurch gekennzeichnet, dass** der Steg (40) derart angeordnet ist, dass die beiden Teilkanäle (41, 42) einen Winkel von wenigstens 40 Grad einschließen, bevorzugt einen Winkel von wenigstens 50 Grad, besonders bevorzugt einen Winkel von wenigstens 60 Grad.

12. Mikrofluidisches Element nach Anspruch 10 oder 11, **dadurch gekennzeichnet, dass** der erste Teilkanal (41) ein Haupt-Teilkanal (43) ist und der zweite Teilkanal (42) ein Bypass-Teilkanal (44) ist und bevorzugt der Bypass-Teilkanal (44) breiter ist als der Haupt-Teilkanal (43).

13. Mikrofluidisches Element nach Anspruch 12, **dadurch gekennzeichnet, dass** die Seitenwände (22) des Haupt-Teilkanals (43) parallel zueinander verlaufen.

14. Mikrofluidisches Element nach einem der Ansprüche 12 oder 13, **dadurch gekennzeichnet, dass** der Haupt-Teilkanal (43) mit dem Kanalabschnitt (18) fluchtet.

15. Mikrofluidisches Element nach einem der Ansprüche 12 bis 14, **dadurch gekennzeichnet, dass**
- die Kammer (9, 11) eine sich an die Kammerwand (20) anschließende Kammerseitenwand (25) umfasst,
- der Bypass-Teilkanal (44) des Ventilabschnitts (19) näher an der Kammerseitenwand (25) angeordnet ist als der Haupt-Teilkanal (43) des Ventilabschnitts (19).

16. Mikrofluidisches Element nach einem der Ansprüche 12 bis 15, **dadurch gekennzeichnet, dass** die Höhe des Bypass-Teilkanals (44) an einer Bypass-Einlassöffnung (46) der Kammer (9, 11) größer ist als die Höhe des Haupt-Teilkanals (43) an der Einlassöffnung (21) der Kammer (9, 11), wobei bevorzugt die Höhen des Bypass-Teilkanals (44) und des Haupt-Teilkanals (43) an dem Übergang (23) zum Kanalabschnitt (18) gleich sind.
